# EUROPÄISCHE PATENTSCHRIFT

(11) **EP 3 502 005 B1**
(45) Veröffentlichungstag und Bekanntmachung des Hinweises auf die Patenterteilung: **05.02.2020**
(21) Anmeldenummer: 17209048.2
(22) Anmeldetag: 20.12.2017
(51) Int. Cl.: B65D 39/00, B65D 51/16, G01N 21/03, B01L 3/00

(54) **VERSCHLUSS-ELEMENT MIT ENTLÜFTUNGSÖFFNUNG**
CLOSURE ELEMENT WITH A VENT OPENING
ÉLÉMENT DE FERMETURE POURVU D'OUVERTURE D'AÉRATION

(43) Veröffentlichungstag der Anmeldung: 26.06.2019
(73) Patentinhaber: TECAN TRADING AG, 8708 Männedorf (CH)
(72) Erfinder: GEBETSROITHER, Harald, 5020 Salzburg (AT); LANSING, MANFRED, 5020 Salzburg (AT); SCHÜRF, Markus, 83346 Bergen (DE)
(74) Vertreter: OK pat AG

(56) Entgegenhaltungen:
- EP-B1- 1 054 700
- FR-A- 1 320 949
- US-A1- 2006 134 354
- US-A1- 2011 147 405
- US-A1- 2011 164 245
- US-A1- 2014 268 125

## Beschreibung

Die vorliegende Erfindung betrifft ein Verschluss-Element mit mindestens einer Entlüftungsöffnung nach dem Oberbegriff des Anspruchs 1. Beim Befüllen eines Behälters mit einer Flüssigkeit kann es erwünscht oder notwendig sein, die Flüssigkeit so abzufüllen, dass nach dem Aufsetzen eines Verschluss-Elements keine Luftreste oder Gasblasen im Behälter verbleiben.

In der DE 44 28 434 A1 wird eine Verschlusskappe zum gasblasenfreien Füllen und Verschliessen von Behältern vorgeschlagen. Diese Verschlusskappe ist so gestaltet, dass durch die Form eines eintauchenden, zum Behälter-Inneren hin geschlossenen Verdrängungskörpers während des Einführens ein Teil des Flüssigkeits-Inhalts durch einen Ringspalt zwischen dem Verdrängungskörper und dem Behälter-Hals nach oben aus dem Behälter verdrängt wird, so dass Gas und etwas Flüssigkeit durch eine oder mehrere Öffnungen in der Kappen-Aussenseite entweichen, bevor die Verschlusskappe mit einem Wulst am unteren Rand der Aussenseite in einer Verschlussposition am Behälter-Hals einrastet, und eine Dichtung am oberen Rand des Behälter-Halses den Innenraum abdichtet.

DE 199 39 195 A1 beschreibt eine spezielle Verschlusskappe, nach dem Oberbegriff des Anspruchs 1, für eine Flasche. Es kann sich dabei um eine Schraub-Verschlusskappe oder eine Steck-Verschlusskappe, insbesondere aber um eine Schraub-Verschlusskappe für eine Kunststoff-Flasche handeln. Im nach unten offenen Hohlraum einer Verschlusskappe befindet sich vor dem Aufsetzen üblicherweise Umgebungsluft. Bei sauerstoffempfindlichen Getränken sollte vermieden werden, dass Luft von der Verschlusskappe beim Verschliessen in eine gefüllte Getränkeflasche gelangt. In der DE 199 39 195 A1 wird dieses Problem mit einem scheibenförmig ausgebildeten Dichtelement gelöst, das gleichzeitig als Verdrängungselement dient. Dieses ist vor dem Aufsetzen der Verschlusskappe mit seinem elastischen Randbereich an der Öffnungsseite der Aussenwand der Verschlusskappe positioniert. Dadurch kann beim Aufbringen der Verschlusskappe die Luft aus dem Hohlraum der Verschlusskappe nicht ins Innere der Flaschenmündung gelangen. Andererseits wird beim Schliessvorgang durch die Relativbewegung zwischen der Verschlusskappe und der Flaschenmündung das scheibenförmige Dichtelement ähnlich einem verfahrbaren Kolben in die Verschlusskappe hinein verschoben. Dabei verdrängt es die Luft des Hohlraums der Verschlusskappe nach aussen, und zwar durch wenigstens einen Ableitkanal. Der Ableitkanal kann eine Bohrung im Boden oder der Aussenwand der Verschlusskappe sein, oder durch Unterbrechungen in den erhabenen Gewindegängen eines Schraubverschlusses gebildet sein. Nach Vollendung des Schliessvorgangs erfüllt das Dichtelement die übliche Dichtfunktion.

Bei einem UV-Bestrahlungsgerät für entnommene Körperflüssigkeiten ist gemäss DE 198 33 435 A1 das kontaminationsfreie Beladen einer beidseitig Stopfen aufweisenden Quarzküvette als Aufnahmegefäss für die Körperflüssigkeit schwierig in der Handhabung. DE 198 33 435 A1 schlägt vor, eine Seite des Aufnahmegefässes dicht zu verschliessen, und auf der Belade- und Entladeseite des Aufnahmegefässes einen besonders gestalteten Adapterstopfen zu verwenden, der einerseits in horizontaler Lage das Beladen oder Entladen mit einer Spritze durch eine Bohrung des Adapterstopfens hindurch erlaubt, und durch eine zusätzlich angebrachte Lüftungsbohrung im Adapterstopfen gleichzeitig einen Druckausgleich, d.h. ein Entlüften bzw. Belüften des Gasraums ermöglicht. Das hier verwendete Aufnahmegefäss wird nur teilweise mit der Körperflüssigkeit beladen, so dass immer ein Gasraum über der Flüssigkeit vorliegt. Zudem spielt hier eine blasenfreie Befüllung keine Rolle.

Aufgabe der vorliegenden Erfindung ist es, ein alternatives Verschluss-Element mit mindestens einer Entlüftungsöffnung zur Verfügung zu stellen.

Diese Aufgabe wird durch ein Verschluss-Element mit den Merkmalen des Anspruchs 1 gelöst.

Die Erfindung umfasst auch einen Behälter nach dem Anspruch 9 mit einem derartigen Verschluss-Element. Die vorliegende Erfindung bezieht sich zudem auf ein Verfahren nach dem Anspruch 14 zum vollständigen und blasenfreien Befüllen eines Behälters mit einem erfindungsgemässen Verschluss-Element.

Auch die Verwendung nach dem Anspruch 15 eines befüllten und mit einem erfindungsgemässen Verschluss-Element versehenen Behälters gehört zur vorliegenden Erfindung.

Bevorzugte erfindungsgemässe Ausführungsformen und Varianten ergeben sich aus den jeweils abhängigen Ansprüchen.

Ein Verschluss-Element mit mindestens einer Entlüftungsöffnung ist gemäss der vorliegenden Erfindung ein Verschlussstopfen, der einen zapfenförmigen Unterteil mit einer Unterseite umfasst, wobei die mindestens eine Entlüftungsöffnung durch einen Kanal im Verschlussstopfen gebildet wird, der beginnend an einer Eintrittsöffnung in den Kanal von der Unterseite des zapfenförmigen Unterteils im Inneren des Verschlussstopfens nach oben verläuft und durch eine seitliche Austrittsöffnung aus dem Verschlussstopfen herausführt. Ein gleichbedeutender Begriff für die durch den Kanal gebildete Entlüftungsöffnung ist Entlüftungskanal.

Der Entlüftungskanal kann in seiner Form und in seinem Verlauf beliebig gestaltet sein. Zum Beispiel kann er im Unterteil auch azentrisch verlaufen. Oder er könnte gebogen oder im einfachsten Fall eine schräge Bohrung von der Unterseite zur Seite hinaus sein. Er könnte auch eine Kombination eines geradlinigen Abschnitts und eines Bogens sein. Die seitliche Austrittsöffnung kann in irgendeiner Entfernung von der Unterseite seitlich aus dem Verschlussstopfen herausführen.

Erfindungsgemäss ist die seitliche Austrittsöffnung die einzige Austrittsöffnung des Verschlussstopfens. Daher weist der Verschlussstopfen also nur eine einzige seitliche Austrittsöffnung und sonst keine weitere offene oder z.B. mit einer Schraube oder einem Verschlusskörper verschliessbare Austrittsöffnung auf.

In einer Ausführungsform des erfindungsgemässen Verschluss-Elements umfasst der Kanal im Verschlussstopfen zwei geradlinige Abschnitte, von denen der eine zentrisch durch den zapfenförmigen Unterteil verläuft und der andere zur seitlichen Austrittsöffnung des Verschlussstopfens führt.

In einer bevorzugten Ausführungsform sind die beiden geradlinigen Abschnitte des Kanals rechtwinklig zueinander ausgerichtet.

In einer anderen bevorzugten Ausführungsform ist der zur seitlichen Austrittsöffnung des Verschlussstopfens führende geradlinige Abschnitt schräg in einem stumpfen Winkel zum geradlinigen zentrischen Abschnitt des Kanals ausgerichtet.

Der Kanal weist bei der seitlichen Austrittsöffnung einen erweiterten Mündungsquerschnitt auf. Ein solcher erweiterter Mündungsquerschnitt kann als Expansionsraum für verdrängte Flüssigkeit beim Aufsetzen und nach dem Einsetzen des Verschluss-Elements in eine Behälteröffnung dienen.

An der Unterseite des zapfenförmigen Unterteils weist der Kanal an der Eintrittsöffnung bevorzugt eine Anfasung auf. Die Anfasung hat bevorzugt eine kegelige Form, ähnlich einem Trichter. Bei dieser Ausgestaltung der Eintrittsöffnung können Luftreste oder Gasblasen leichter in den Entlüftungskanal gelangen.

Beim erfindungsgemässen Verschluss-Element kann der zapfenförmige Unterteil des Verschlussstopfens in bevorzugten Ausführungsformen rund oder rechteckig sein. Rund bedeutet besonders bevorzugt kreisrund, während rechteckig auch quadratisch mit einschliesst. In einer Ausführungsform des erfindungsgemässen Verschluss-Elements umfasst der Verschlussstopfen einen am zapfenförmigen Unterteil über einen optionalen Übergangsbereich oben angeformten Griffteil. Bei einer solchen Ausführungsform führt die seitliche Austrittsöffnung bevorzugt aus dem Griffteil heraus. Der optionale Übergangbereich kann beispielsweise eine Einschnürung oder ein zylindrischer Abschnitt sein. Auch im Übergangsbereich könnte prinzipiell die seitliche Austrittsöffnung herausführen, oder im oberen Bereich des zapfenförmigen Unterteils in der Nähe des Übergangsbereichs. Der Griffteil kann aber auch direkt ohne einen Übergangsbereich am zapfenförmigen Unterteil angeformt sein. Im einfachsten Fall ist ein direkt angeformter Griffteil von der Form her eine Verlängerung des zapfenförmigen Unterteils. In letzterem Fall hätte der Verschlussstopfen als Ganzes die Form eines Zapfens mit einem erfindungsgemässen Entlüftungskanal.

Es kommen verschiedene Materialien für das erfindungsgemässe Verschluss-Element in Frage, z.B. auch ein Verschlussstopfen aus Kork, mit einem erfindungsgemässen Entlüftungskanal. Das erfindungsgemässe Verschluss-Element ist jedoch bevorzugt aus Kunststoff gebildet, wobei als Kunststoff für das Verschluss-Element PTFE (Polytetrafluorethylen) besonders bevorzugt ist.

Zur Bildung des erfindungsgemässen Entlüftungskanals in einem Verschlussstopfen können durch nachträgliche Bearbeitung Bohrungen angebracht worden sein. Weitere mögliche Methoden sind z.B. eine Herstellung durch 3D-Druck oder durch Lasersinterverfahren.

Die Erfindung umfasst auch einen Behälter mit einem durch einen Boden und eine Seitenwand begrenzten Innenraum und einer Behälteröffnung, wobei bei einem in die Behälteröffnung eingesetzten erfindungsgemässen Verschluss-Element (gemäss Anspruch 1) mit zur Behälteröffnung passender Geometrie des zapfenförmigen Unterteils eine Verbindung vom Innenraum des Behälters nach aussen durch den Kanal im Verschlussstopfen besteht.

Unter der Seitenwand des Behälters wird eine allseitige Seitenwand verstanden, die rundherum führt. Je nach Grundriss des Bodens kann der Umfang der Seitenwand zum Beispiel rund sein, oder bei einem beispielsweise rechteckigen Boden kann die Seitenwand aus vier entsprechenden Teilwänden bestehen.

Die Behälteröffnung ist in bevorzugten Ausführungsformen rund oder rechteckig. Rund bedeutet besonders bevorzugt kreisrund, während rechteckig auch quadratisch mit einschliesst. Eine zueinander passende Geometrie von Behälteröffnung und zapfenförmigem Unterteil eines Verschlussstopfens ist beispielsweise ein Kegel-Normschliff.

In einer bevorzugten Ausführungsform ist bei einem Behälter ein Verschluss-Element mit einem Griffteil eingesetzt, wobei die seitliche Austrittsöffnung aus dem Griffteil herausführt, und der Griffteil bei der seitlichen Austrittsöffnung über die Seitenwand des Behälters hinausragt. Bei einer solchen Ausführungsform ist nach horizontalem Ablegen mit der seitlichen Austrittsöffnung im Griffteil nach oben die Kante der seitlichen Austrittsöffnung höher gelegen als die Seitenwand des Behälters. Das ist vorteilhaft für das Entlüften von Gasblasen beim Befüllen und auch für das Sammeln von aus dem Innenraum verdrängter Flüssigkeit in horizontaler Lage des Behälters, ohne dass dabei die in den Entlüftungskanal verdrängte Flüssigkeit unmittelbar überläuft. Durch ein überstehendes Flüssigkeitsniveau im Entlüftungskanal bleibt zudem der Innenraum eines befüllten und in horizontale Lage gebrachten Behälters durch einen leichten Überdruck durch die Flüssigkeitssäule zuverlässig und blasenfrei mit Flüssigkeit gefüllt.

Der Behälter ist bevorzugt eine Küvette. Im Rahmen der vorliegenden Erfindung ist eine Küvette in ihrem Querschnitt bevorzugt rechteckig, wobei rechteckig auch quadratisch mit einschliesst.

Eine Küvette ist bevorzugt aus transparentem Kunststoff, Glas oder Quarzglas hergestellt. Besonders bevorzugt sind rechteckige Standard-Küvetten mit 10 mm Schichtdicke (auch Schichttiefe genannt) für in der Küvette enthaltene Flüssigkeit, in Durchstrahlrichtung eines Messstrahls durch die transparenten optischen Seitenflächen.

Die vorliegende Erfindung bezieht sich auch auf ein Verfahren zum vollständigen und blasenfreien Befüllen eines Behälters mit einem Verschluss-Element, wobei zunächst der Behälter in vertikaler Lage mit einer Flüssigkeit weitgehend gefüllt wird, und dann ein Verschluss-Element mit den Merkmalen gemäss Anspruch 1 eingesetzt wird, wobei durch den eintauchenden zapfenförmigen Unterteil des Verschlussstopfens Luftreste und ein Teil der eingefüllten Flüssigkeit durch die Eintrittsöffnung in den an der Unterseite des zapfenförmigen Unterteils beginnenden Kanal verdrängt und hinaufgedrückt werden, und schliesslich der Behälter in eine horizontale Lage gebracht wird, so dass die seitliche Austrittsöffnung des Verschlussstopfens mit im Kanal stehender Flüssigkeit nach oben weist.

Zur Erfindung gehört auch die Verwendung eines befüllten Behälters mit einem erfindungsgemässen Verschluss-Element für Messungen in horizontaler Lage, wobei der Behälter bevorzugt eine Küvette ist. Die Befüllung des Behälters kann vorzugsweise nach dem im vorhergehenden Absatz beschriebenen Verfahren erfolgen. Die Messungen in horizontaler Lage an mit Probeflüssigkeiten befüllten Küvetten erfolgen bevorzugt auf einem Adapter in einem Mikroplatten-Reader. Ein Mikroplatten-Reader (auch Mikroplatten-Lesegerät genannt) dient oft zur Auswertung biochemischer oder zellbiologischer Assays (Probe-Untersuchungen) und umfasst ein Spektrometer für photometrische Messungen an meist biologischen Probeflüssigkeiten in den Vertiefungen (Wells) von Mikroplatten (auch Mikrotiterplatten genannt). Die vorliegende Erfindung erlaubt es nun, auch mit Küvetten Messungen in einem Mikroplatten-Reader durchzuführen, wenn entsprechend blasenfrei befüllte Küvetten horizontal auf einen Adapter gelegt werden, welcher die Grundriss-Abmessungen einer Standard-Mikroplatte hat.

Es handelt sich bei den Messungen um photometrische Messungen, ausgewählt aus einer Gruppe von Wellenlängen und Detektionsmethoden, die UV, VIS, NIR, IR, Fluoreszenz, Lumineszenz und Absorption umfasst.

In normalen Spektrophotometern stellt sich das Problem einer vollständigen und blasenfreien Befüllung der Küvetten nicht, weil dort die Küvetten vertikal in den Küvettenhalter bzw. Probenschacht eingesetzt werden. Dort muss lediglich die Mindest-Füllhöhe der Küvetten beachtet werden, damit der gesamte Messstrahl die Flüssigkeit durchstrahlt. Müssen hingegen die Küvetten für photometrische Messungen horizontal positioniert werden (wie im erwähnten Mikroplatten-Reader), so driften Luftblasen, die sich bei herkömmlichen Stopfen kaum vermeiden lassen, aus dem oberen Bereich der Küvette ähnlich wie bei einer Wasserwaage in die Mitte der Küvette und verfälschen die Messungen. Dieses Problem konnte dank der vorliegenden Erfindung mit dem erfindungsgemässen Verschluss-Element auf überraschende Weise elegant gelöst werden.

Ein anderes Problem wird zudem mit dem erfindungsgemässen Verschluss-Element auch noch gelöst. Erwärmt sich nämlich bei einer länger dauernden Messung die Probeflüssigkeit durch eine intensive Lichteinstrahlung, so dehnt sich die Flüssigkeit aus, was zu einem Überdruck und zum Wegsprengen eines herkömmlichen Stopfens führen kann. Bei Verwendung eines erfindungsgemässen Verschluss-Elements kann sich hingegen die Flüssigkeit durch den Kanal im Verschlussstopfen ausdehnen, ohne dass es zu einer Druckerhöhung in der Küvette kommt.

Im Folgenden wird die Erfindung anhand von schematischen Figuren näher erläutert, welche beispielhafte Ausführungsformen darstellen, die den Umfang der vorliegenden Erfindung nicht einschränken. Dabei zeigt:
- Fig. 1: in den Teilfiguren A-C ein erfindungsgemässes Verschluss-Element eingesetzt in einen Behälter in verschiedenen Ansichten, nämlich:
- Fig. 1A: einen Längsschnitt durch den Behälter mit eingesetztem Verschluss-Element in der Ebene des Entlüftungskanals;
- Fig. 1B: eine Seitenansicht auf den Behälter mit eingesetztem Verschluss-Element mit frontalem Blick auf die seitliche Austrittsöffnung im Griffteil des Verschlussstopfens;
- Fig. 1C: eine Ansicht von oben auf den Behälter mit eingesetztem Verschluss-Element;
- Fig. 2: in den Teilfiguren A-E ein erfindungsgemässes Verschluss-Element in verschiedenen Ansichten, nämlich:
- Fig. 2A: einen Längsschnitt durch das Verschluss-Element in der Ebene des Entlüftungskanals;
- Fig. 2B: eine Seitenansicht auf das Verschluss-Element mit frontalem Blick auf die seitliche Austrittsöffnung im Griffteil des Verschlussstopfens;
- Fig. 2C: eine Ansicht von oben auf das Verschluss-Element;
- Fig. 2D: eine Seitenansicht auf das Verschluss-Element von der entgegengesetzten Seite der Austrittsöffnung im Griffteil;
- Fig. 2E: eine Ansicht auf die Unterseite des Verschluss-Elements;
- Fig. 3: einen Längsschnitt durch eine andere Ausführungsform eines erfindungsgemässen Verschluss-Elements in der Ebene des Entlüftungskanals.
- Fig. 4: einen Längsschnitt durch eine weitere Ausführungsform eines erfindungsgemässen Verschluss-Elements in der Ebene des Entlüftungskanals.

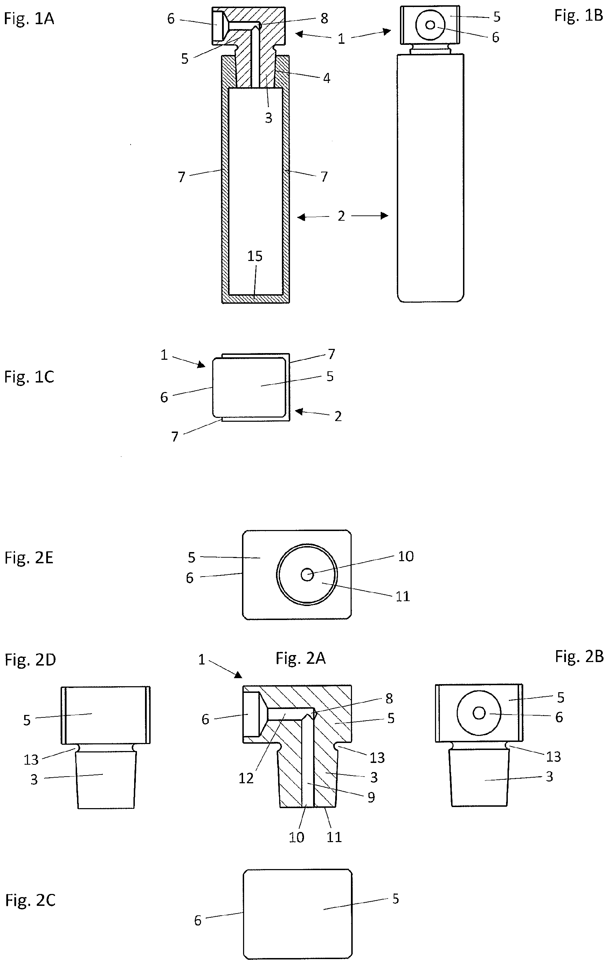

Die Figur 1 zeigt schematisch ein erfindungsgemässes Verschluss-Element 1 eingesetzt in einen Behälter 2, der hier senkrecht auf seinem Boden 15 stehend gezeichnet ist. Das hier dargestellte Verschluss-Element 1 umfasst einen Griffteil 5. Der Behälter 2 stellt im dargestellten Fall eine rechteckige Küvette dar. Die Geometrie des zapfenförmigen Unterteils 3 des Verschluss-Elements 1 passt zur Behälteröffnung 4 und ist im dargestellten Beispiel von konischer Form. In den Teilfiguren 1A und 1C ist als vorteilhafte Ausgestaltung ersichtlich, dass der Griffteil 5 mit seiner seitlichen Austrittsöffnung 6 über die Seitenwand 7 des Behälters 2 hinausragt. Die anderen drei Seiten des Griffteils 5 ragen nicht darüber hinaus, so dass es möglich ist, den Behälter 2 insbesondere auf diejenige Teilwand der Seitenwand 7 horizontal abzulegen, die bei eingesetztem Verschluss-Element 1 der Austrittsöffnung 6 im Griffteil 5 entgegengesetzt ist. In den Teilfiguren 1A und 1B ist dort, wo der Entlüftungskanal 8 in die seitliche Austrittsöffnung 6 mündet, ein Bereich mit erweitertem Mündungsquerschnitt gezeichnet. Letzterer dient als Expansionsraum für verdrängte Flüssigkeit in horizontaler Lage des Behälters 2. Weitere Details des erfindungsgemässen Verschluss-Elements 1 werden anhand der Figur 2 erläutert.

Die Figur 2 zeigt in den Teilfiguren A-E das erfindungsgemässe Verschluss-Element 1 aus Figur 1 nochmals separat in verschiedenen Ansichten. Die Ansichten von Fig. 2A, 2B und 2C entsprechen den analog bezeichneten Ansichten von Figur 1. Zusätzlich sind in Fig. 2D und 2E Ansichten des Verschluss-Elements 1 aus anderen Blickrichtungen dargestellt, wie in der Figuren-Übersicht angegeben. In Fig. 2A ist eine Ausführungsform des erfindungsgemässen Verschluss-Elements 1 ersichtlich, bei welcher der Kanal 8 im Verschlusstopfen 1 zwei geradlinige Abschnitte umfasst, von denen der eine Abschnitt 9, beginnend bei der Eintrittsöffnung 10 an der Unterseite 11, zentrisch durch den zapfenförmigen Unterteil 3 verläuft, und der andere, zur seitlichen Austrittsöffnung 6 im Griffteil 5 führende Abschnitt 12 rechtwinklig dazu ausgerichtet ist. Der Kanal 8 weist dort, wo er in die seitliche Austrittsöffnung 6 mündet, einen Bereich mit erweitertem Mündungsquerschnitt auf (wie bereits bei Figur 1 erwähnt). Der hier dargestellte Verschlussstopfen 1 weist zwischen dem zapfenförmigen Unterteil 3 und dem oben angeformten Griffteil 5 einen Übergangsbereich 13 auf, hier in Form einer Einschnürung.

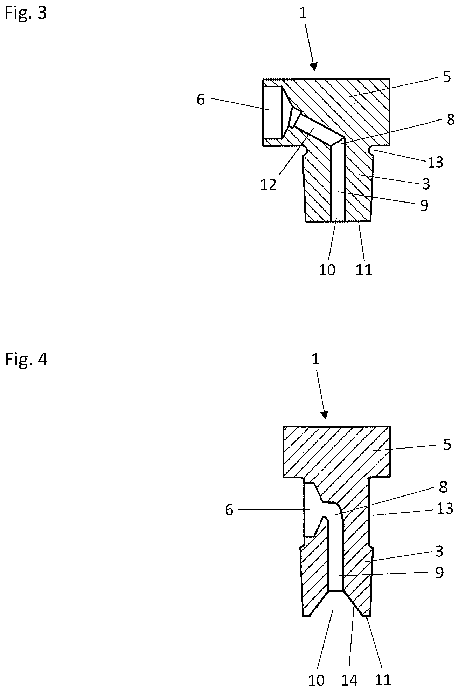

Die Figur 3 zeigt in einer mit Fig. 2A vergleichbaren Ansicht eine andere vorteilhafte Ausführungsform eines Verschluss-Elements 1, bei welcher der zur seitlichen Austrittsöffnung 6 des Griffteils 5 führende geradlinige Abschnitt 12 des Kanals 8 schräg in einem stumpfen Winkel zum geradlinigen zentrischen Abschnitt 9 des Kanals 8 ausgerichtet ist. Eine solche schräge Bohrung kann das etwaige Hängenbleiben kleiner Gasblasen im Winkel der aufeinandertreffenden beiden geradlinigen Abschnitte des Kanals 8 vermeiden. Auch hier ist es wieder wie dargestellt bevorzugt, wenn der Kanal 8 dort, wo er in die seitliche Austrittsöffnung 6 mündet, einen Bereich mit erweitertem Mündungsquerschnitt aufweist. Auch der in Figur 3 dargestellte Verschlussstopfen 1 weist zwischen dem zapfenförmigen Unterteil 3 und dem oben angeformten Griffteil 5 einen Übergangsbereich 13 in Form einer Einschnürung auf.

In der Figur 4 werden anhand einer anderen Ausführungsform eines Verschluss-Elements 1 weitere mögliche Ausführungen von einzelnen Merkmalen dargestellt. Bei dieser Ausführungsform eines Verschlussstopfens 1 befindet sich zwischen dem zapfenförmigen Unterteil 3 und dem oben angeformten Griffteil 5 ein Übergangsbereich 13 in Form eines zylindrischen Halses. Die seitliche Austrittsöffnung 6 führt aus diesem Hals heraus. Der hier dargestellte Entlüftungskanal 8 hat einen zentrischen geradlinigen Abschnitt 9 durch den zapfenförmigen Unterteil 3 hindurch, und eine gebogene Form im Abschnitt zur seitlichen Austrittsöffnung 6 hin.

Ein weiteres Detail ist in der Figur 4 an der Unterseite 11 des zapfenförmigen Unterteils 3 zu sehen: Hier weist der Kanal 8 an der Eintrittsöffnung 10 eine Anfasung 14 auf. Die gezeigte Anfasung hat eine kegelige Form wie ein Trichter. In eine so gestaltete Eintrittsöffnung können Luftreste oder Gasblasen leichter eintreten und nach oben entweichen.

Eine Anfasung der Eintrittsöffnung kann bei allen Ausführungsformen eines erfindungsgemässen Verschluss-Elements angewandt werden und ist nicht an die in Figur 4 gezeigte Ausführung gebunden.

An dieser Stelle soll darauf hingewiesen werden, dass beliebige Kombinationen der beschriebenen und/oder in den Figuren gezeigten Merkmale zum Umfang der vorliegenden Erfindung gehören, solange die Kombinationen nicht inkonsistent sind.

Wie der Beschreibung und den Erläuterungen zu den Figuren zu entnehmen ist, wird mit der vorliegenden Erfindung eine vielseitige Lösung mit mehreren Vorteilen zur Verfügung gestellt.

### Bezugszeichenliste

Gleiche Bezugszeichen in den Figuren deuten auf entsprechende Merkmale hin, auch wenn in der Beschreibung der einzelnen Figuren nicht in jedem Fall ausdrücklich darauf Bezug genommen wird.
- 1: Verschluss-Element, Verschlussstopfen
- 2: Behälter
- 3: zapfenförmiger Unterteil des Verschluss-Elements
- 4: Behälteröffnung
- 5: Griffteil des Verschlussstopfens
- 6: seitliche Austrittsöffnung aus dem Verschlussstopfen
- 7: Seitenwand des Behälters
- 8: Kanal, Entlüftungskanal
- 9: zentrischer geradliniger Abschnitt des Kanals
- 10: Eintrittsöffnung in den Kanal
- 11: Unterseite des zapfenförmigen Unterteils
- 12: zur seitlichen Öffnung des Verschlussstopfens führender geradliniger Abschnitt des Kanals
- 13: Übergangsbereich des Verschlussstopfens
- 14: Anfasung der Eintrittsöffnung
- 15: Boden des Behälters

## Patentansprüche

1. Verschluss-Element (1) mit mindestens einer Entlüftungsöffnung, wobei das Verschluss-Element (1) ein Verschlussstopfen (1) ist, der einen zapfenförmigen Unterteil (3) mit einer Unterseite (11) umfasst, wobei die mindestens eine Entlüftungsöffnung durch einen Kanal (8) im Verschlussstopfen (1) gebildet wird, der beginnend an einer Eintrittsöffnung (10) in den Kanal (8) von der Unterseite (11) des zapfenförmigen Unterteils (3) im Inneren des Verschlussstopfens (1) nach oben verläuft und durch eine seitliche Austrittsöffnung (6) aus dem Verschlussstopfen (1) herausführt, wobei die seitliche Austrittsöffnung (6) die einzige Austrittsöffnung des Verschlussstopfens (1) ist, **dadurch gekennzeichnet, dass** der Kanal (8) bei der seitlichen Austrittsöffnung (6) einen erweiterten Mündungsquerschnitt aufweist.

2. Verschluss-Element (1) nach Anspruch 1, **dadurch gekennzeichnet, dass** der Kanal (8) im Verschlussstopfen (1) zwei geradlinige Abschnitte (9, 12) umfasst, von denen der eine zentrisch (9) durch den zapfenförmigen Unterteil (3) verläuft und der andere (12) zur seitlichen Austrittsöffnung (6) des Verschlussstopfens (1) führt.

3. Verschluss-Element (1) nach Anspruch 2, **dadurch gekennzeichnet, dass** die beiden geradlinigen Abschnitte (9, 12) des Kanals (8) rechtwinklig zueinander ausgerichtet sind.

4. Verschluss-Element (1) nach Anspruch 2, **dadurch gekennzeichnet, dass** der zur seitlichen Austrittsöffnung (6) des Verschlussstopfens (1) führende geradlinige Abschnitt (12) schräg in einem stumpfen Winkel zum geradlinigen zentrischen Abschnitt (9) des Kanals (8) ausgerichtet ist.

5. Verschluss-Element (1) nach einem der vorhergehenden Ansprüche, **dadurch gekennzeichnet, dass** der Kanal (8) an der Eintrittsöffnung (10) an der Unterseite (11) des zapfenförmigen Unterteils (3) eine Anfasung (14) aufweist.

6. Verschluss-Element (1) nach einem der vorhergehenden Ansprüche, **dadurch gekennzeichnet, dass** der zapfenförmige Unterteil (3) des Verschlussstopfens (1) rund oder rechteckig ist.

7. Verschluss-Element (1) nach einem der vorhergehenden Ansprüche, **dadurch gekennzeichnet, dass** der Verschlussstopfen (1) einen am zapfenförmigen Unterteil (3) über einen optionalen Übergangsbereich (13) oben angeformten Griffteil (5) umfasst, wobei die seitliche Austrittsöffnung (6) bevorzugt aus dem Griffteil (5) herausführt.

8. Verschluss-Element (1) nach einem der vorhergehenden Ansprüche, **dadurch gekennzeichnet, dass** das Verschluss-Element (1) aus Kunststoff gebildet ist, wobei als Kunststoff PTFE bevorzugt ist.

9. Behälter (2) mit einem durch einen Boden (15) und eine Seitenwand (7) begrenzten Innenraum und einer Behälteröffnung (4), **dadurch gekennzeichnet, dass** bei einem in die Behälteröffnung (4) eingesetzten Verschluss-Element (1) gemäss Anspruch 1 mit zur Behälteröffnung (4) passender Geometrie des zapfenförmigen Unterteils (3) eine Verbindung vom Innenraum des Behälters (2) nach aussen durch den Kanal (8) im Verschlussstopfen (1) besteht.

10. Behälter (2) nach Anspruch 9, **dadurch gekennzeichnet, dass** die Behälteröffnung (4) rund oder rechteckig ist.

11. Behälter (2) nach Anspruch 9 oder 10, **dadurch gekennzeichnet, dass** ein Verschluss-Element (1) mit einem Griffteil (5) eingesetzt ist, wobei die seitliche Austrittsöffnung (6) aus dem Griffteil (5) herausführt und der Griffteil (5) bei der seitlichen Austrittsöffnung (6) über die Seitenwand (7) des Behälters (2) hinausragt.

12. Behälter (2) nach einem der Ansprüche 9 bis 11, **dadurch gekennzeichnet, dass** der Behälter (2) eine Küvette ist, wobei die Küvette in ihrem Querschnitt bevorzugt rechteckig ist.

13. Behälter (2) nach Anspruch 12, **dadurch gekennzeichnet, dass** die Küvette aus transparentem Kunststoff, Glas oder Quarzglas hergestellt ist.

14. Verfahren zum vollständigen und blasenfreien Befüllen eines Behälters (2) mit einem Verschluss-Element (1), **dadurch gekennzeichnet, dass** zunächst der Behälter (2) in vertikaler Lage mit einer Flüssigkeit weitgehend gefüllt wird, dass dann ein Verschluss-Element (1) gemäss Anspruch 1 eingesetzt wird, wobei durch den eintauchenden zapfenförmigen Unterteil (3) des Verschlussstopfens (1) Luftreste und ein Teil der eingefüllten Flüssigkeit durch die Eintrittsöffnung (10) in den an der Unterseite (11) des zapfenförmigen Unterteils (3) beginnenden Kanal (8) verdrängt und hinaufgedrückt werden, und schliesslich der Behälter (2) in eine horizontale Lage gebracht wird, so dass die seitliche Austrittsöffnung (6) des Verschlussstopfens (1) mit im Kanal (8) stehender Flüssigkeit nach oben weist.

15. Verwendung eines befüllten Behälters (2) mit einem Verschluss-Element (1) gemäss Anspruch 1 für Messungen in horizontaler Lage, wobei der Behälter (2) bevorzugt eine Küvette ist, und wobei es sich bei den Messungen um photometrische Messungen handelt, ausgewählt aus einer Gruppe von Wellenlängen und Detektionsmethoden, die UV, VIS, NIR, IR, Fluoreszenz, Lumineszenz und Absorption umfasst.

16. Verwendung nach Anspruch 15, **dadurch gekennzeichnet, dass** die Messungen in horizontaler Lage an mit Probeflüssigkeiten befüllten Küvetten auf einem Adapter in einem Mikroplatten-Reader erfolgen.

## Claims

1. Closure element (1) having at least one vent opening, wherein the closure element (1) is a closure plug (1) which comprises a peg-shaped lower part (3) having an underside (11), wherein the at least one vent opening is formed by a channel (8) in the closure plug (1), which, starting at an inlet opening (10) into the channel (8), extends upwards from the underside (11) of the peg-shaped lower part (3) in the interior of the closure plug (1) and leads out of the closure plug (1) through a lateral outlet opening (6), wherein the lateral outlet opening (6) is the only outlet opening of the closure plug (1), **characterized in that** the channel (8) has an enlarged orifice cross-section at the lateral outlet opening (6).

2. Closure element (1) according to claim 1, **characterized in that** the channel (8) comprises two straight sections (9, 12) in the closure plug (1), one of which extends centrally (9) through the peg-shaped lower part (3) and the other (12) leads to the lateral outlet opening (6) of the closure plug (1).

3. Closure element (1) according to claim 2, **characterized in that** the two straight sections (9, 12) of the channel (8) are aligned right-angled to one another.

4. Closure element (1) according to claim 2, **characterized in that** the straight section (12) leading to the lateral outlet opening (6) of the closure plug (1) is aligned obliquely at an obtuse angle to the straight central section (9) of the channel (8).

5. Closure element (1) according to one of the preceding claims, **characterized in that** the channel (8) has a chamfer (14) at the inlet opening (10) on the underside (11) of the peg-shaped lower part (3).

6. Closure element (1) according to one of the preceding claims, **characterized in that** the peg-shaped lower part (3) of the closure plug (1) is round or rectangular.

7. Closure element (1) according to one of the preceding claims, **characterized in that** the closure plug (1) comprises a handle part (5) which is integrally formed on top of the peg-shaped lower part (3) via an optional transition region (13), wherein the lateral outlet opening (6) preferably leads out of the handle part (5).

8. Closure element (1) according to one of the preceding claims, **characterized in that** the closure element (1) is formed from plastic, wherein PTFE is preferred as the plastic.

9. Container (2) having an interior space, which is bounded by a base (15) and a side wall (7), and a container opening (4), **characterized in that,** in the case of a closure element (1) inserted into the container opening (4) according to claim 1 with the geometry of the peg-shaped lower part (3) matching the container opening (4), there is a connection from the interior space of the container (2) outwardly through the channel (8) in the closure plug (1).

10. Container (2) according to claim 9, **characterized in that** the container opening (4) is round or rectangular.

11. Container (2) according to claim 9 or 10, **characterized in that** a closure element (1) with a handle part (5) is inserted, wherein the lateral outlet opening (6) leads out of the handle part (5) and the handle part (5) projects beyond the side wall (7) of the container (2) at the lateral outlet opening (6).

12. Container (2) according to one of claims 9 to 11, **characterized in that** the container (2) is a cuvette, wherein the cuvette is preferably rectangular in its cross-section.

13. Container (2) according to claim 12, **characterized in that** the cuvette is made of transparent plastic, glass or quartz glass.

14. Method for the complete and bubble-free filling of a container (2) having a closure element (1), **characterized in that** first the container (2) is largely filled with a liquid in the vertical position, **in that** a closure element (1) according to claim 1 is then inserted, wherein air residues and a part of the filled liquid are displaced and pressed up by the immersing peg-shaped lower part (3) of the closure plug (1) through the inlet opening (10) into the channel (8) commencing at the underside (11) of the cone-shaped lower part (3), and finally the container (2) is brought into a horizontal position so that the lateral outlet opening (6) of the closure plug (1) faces upwards with liquid standing in the channel (8).

15. Use of a filled container (2) having a closure element (1) according to claim 1 for measurements in horizontal position, wherein the container (2) is preferably a cuvette and wherein the measurements are photometric measurements selected from a group of wavelengths and detection methods comprising UV, VIS, NIR, IR, fluorescence, luminescence and absorption.

16. Use according to claim 15, **characterized in that** the measurements are carried out in a horizontal position on cuvettes filled with sample liquids on an adapter in a microplate reader.

## Revendications

1. Elément de fermeture (1) avec au moins une ouverture d'aération, l'élément de fermeture (1) étant un bouchon de fermeture (1) comprenant une partie inférieure (3) en forme de tenon avec un côté inférieur (11), la au moins une ouverture d'aération étant formée dans le bouchon de fermeture (1) par un canal (8) qui s'étend vers le haut depuis une ouverture d'entrée (10) dans le canal (8) depuis le côté inférieur (11) de la partie inférieure en forme de tenon (3) à l'intérieur du bouchon de fermeture (1) et qui sort du bouchon de fermeture (1) par une ouverture de sortie latérale (6), l'ouverture de sortie latérale (6) étant la seule ouverture de sortie du bouchon de fermeture (1), **caractérisé en ce que** le canal (8) présente, au niveau de l'ouverture de sortie latérale (6), une section transversale d'embouchure élargie.

2. Elément de fermeture (1) selon la revendication 1, **caractérisé en ce que** le canal (8) dans le bouchon de fermeture (1) comprend deux sections droites (9, 12), l'une s'étendant de façon centrée (9) à travers la partie inférieure en forme de tenon (3), et l'autre (12) allant jusqu'à l'ouverture de sortie latérale (6) du bouchon de fermeture (1).

3. Elément de fermeture (1) selon la revendication 2, **caractérisé en ce que** les deux sections droites (9, 12) du canal (8) sont orientées à angle droit l'une par rapport à l'autre.

4. Elément de fermeture (1) selon la revendication 2, **caractérisé en ce que** la section droite (12) qui va jusqu'à l'ouverture de sortie latérale (6) du bouchon de fermeture (1) est orientée inclinée selon un angle obtus par rapport à la section (9) droite centrale du canal (8).

5. Elément de fermeture (1) selon l'une des revendications précédentes, **caractérisé en ce que** le canal (8) présente un chanfrein (14) au niveau de l'ouverture d'entrée (10) sur le côté inférieur (11) de la partie inférieure en forme de tenon (3).

6. Elément de fermeture (1) selon l'une des revendications précédentes, **caractérisé en ce que** la partie inférieure en forme de tenon (3) du bouchon de fermeture (1) est ronde ou rectangulaire.

7. Elément de fermeture (1) selon l'une des revendications précédentes, **caractérisé en ce que** le bouchon de fermeture (1) comprend une partie de poignée (5) réalisée en haut de la partie inférieure en forme de tenon (3), au-dessus d'une zone de transition (13) optionnelle, l'ouverture de sortie latérale (6) sortant de préférence de la partie de poignée (5).

8. Elément de fermeture (1) selon l'une des revendications précédentes, **caractérisé en ce que** l'élément de fermeture (1) est formé en matière plastique, avec une préférence pour le PTFE comme matière plastique.

9. Récipient (2) avec un espace intérieur délimité par un fond (15) et une paroi latérale (7) et avec une ouverture de récipient (4), **caractérisé en ce que**, lorsque l'on installe l'élément de fermeture (1) selon la revendication 1 dans l'ouverture de récipient (4) avec une géométrie de la partie inférieure en forme de tenon (3) adaptée à l'ouverture de récipient (4), il se créé dans le bouchon de fermeture (1) une liaison entre l'espace intérieur du récipient (2) et l'extérieur par le canal (8).

10. Récipient (2) selon la revendication 9, **caractérisé en ce que** l'ouverture de récipient (4) est ronde ou rectangulaire.

11. Récipient (2) selon la revendication 9 ou 10, **caractérisé en ce qu'**un élément de fermeture (1) avec une partie de poignée (5) est mis en place, l'ouverture de sortie latérale (6) sortant de la partie de poignée (5), et la partie de poignée (5) faisant saillie au niveau de l'ouverture de sortie latérale (6) au-dessus de la paroi latérale (7) du récipient (2).

12. Récipient (2) selon l'une des revendications 9 à 11, **caractérisé en ce que** le récipient (2) est une cuvette, la cuvette ayant de préférence une section transversale rectangulaire.

13. Récipient (2) selon la revendication 12, **caractérisé en ce que** la cuvette est fabriquée en matière plastique transparente, en verre ou en verre de quartz.

14. Procédé pour remplir complètement et sans bulles un récipient (2) avec un élément de fermeture (1), **caractérisé en ce que** l'on remplit d'abord en grande partie le récipient (2) en position verticale avec un liquide, **en ce que** l'on installe ensuite un élément de fermeture (1) selon la revendication 1, de l'air résiduel et une partie du liquide versé étant déplacés par la partie inférieure en forme de tenon (3) immergée du bouchon de fermeture (1) et poussés à travers l'ouverture d'entrée (10) dans le canal commençant au niveau du côté inférieur (11) de la partie inférieure en forme de tenon (3), et **en ce que** l'on met enfin le récipient (2) en position horizontale, de sorte que l'ouverture de sortie latérale (6) du bouchon de fermeture (1) soit dirigée vers le haut, avec du liquide dans le canal (8).

15. Utilisation d'un récipient rempli (2) avec un élément de fermeture (1) selon la revendication 1 pour effectuer des mesures en position horizontale, le récipient (2) étant de préférence une cuvette, et les mesures étant des mesures photométriques choisies à partir d'un groupe de longueurs d'ondes et de méthodes de détection comprenant UV, VIS, NIR, IR, fluorescence, luminescence et absorption.

16. Utilisation selon la revendication 15, **caractérisée en ce que** les mesures sont effectuées en position horizontale avec des cuvettes remplies d'échantillons sur un adaptateur dans un lecteur de microplaques.
